# EUROPEAN PATENT SPECIFICATION

(11) **EP 4 542 872 B1**
(45) Date of publication and mention of the grant of the patent: **14.10.2026**
(21) Application number: 23841905.5
(22) Date of filing: 29.05.2023
(51) Int. Cl.: H04B 7/0404, H04B 7/024, H04B 7/06

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 18.07.2022 CN 202210843289
(43) Date of publication of application: 23.04.2025
(73) Proprietor: Huawei Technologies Co., Ltd., Shenzhen, Guangdong 518129 (CN)
(72) Inventor: XUE, Huaijie, Shenzhen, Guangdong 518129 (CN); XU, Heng, Shenzhen, Guangdong 518129 (CN); WANG, Yi, Shenzhen, Guangdong 518129 (CN)
(74) Representative: Körber, Martin Hans
(86) International application number: PCT/CN2023/096757
(87) International publication number: WO 2024/016837

(56) References cited:
- WO-A1-2017/124967
- CN-A- 102 308 438
- CN-A- 113 745 853
- US-A1- 2003 052 828
- US-A1- 2018 278 320
- US-A1- 2018 278 320
- US-A1- 2020 412 425

## Description

### TECHNICAL FIELD

This application relates to the field of communication technologies, and in particular, to a communication method and apparatus.

### BACKGROUND

In a wireless communication system, an antenna element refers to an apparatus that is configured to receive a signal and transmit a signal on a wireless communication device. In other words, the antenna element may be configured to transmit and receive an electromagnetic wave.

With popularization of a multi-antenna technology, an aperture gain can be obtained by deploying more antenna elements in a communication apparatus (for example, a network device). For example, in a beam-based communication mode, by increasing a quantity of antenna elements, more independent beams can be formed, and a beam direction can be adjusted more flexibly, to greatly improve user experience and increase a cell capacity. Based on this, how to improve performance of the multi-antenna technology is a technical problem worth studying.

US 2018/0278320 A1 addresses wireless communication systems with user equipment having multiple antenna sub-arrays, where each sub-array comprises a separate panel of antenna elements, particularly in millimeter wave systems. US 2020/412425 A1 discloses a method for antenna element selection based on channel quality metrics compared to predefined thresholds.

### SUMMARY

This application provides a communication method and apparatus, to optimize a spacing between used antenna elements by flexibly setting a quantity of antenna elements used for sending signals, reduce interference between signals sent by different antenna elements, and improve communication performance. The application is set out in the appended set of claims.

A first aspect of this application provides a communication method. The method is performed by a network device, or the method is performed by some components (for example, a processor, a chip, a chip system, or the like) in a network device, or the method may be implemented by a logical module or software that can implement all or some functions of a network device. In the first aspect and possible implementations of the first aspect, an example in which the communication method is performed by a network device is used for descriptions. In the method, a network device obtains a measurement result of a first signal, where antenna elements corresponding to the first signal are N of M antenna elements, N and M are positive integers, and N is less than M; and when the measurement result of the first signal is better than a first threshold, the network device sends a second signal based on the N antenna elements.

According to the foregoing technical solution, the network device has at least M antenna elements. After the network device obtains the measurement result of the first signal corresponding to N of the M antenna elements, when the measurement result of the first signal is better than the first threshold, the network device sends the second signal based on the N antenna elements. In other words, when the network device determines that the measurement result of the first signal corresponding to the N antenna elements is better (that is, better than the first threshold), the network device sends the second signal based on some of the M antenna elements. Therefore, a spacing between used antenna elements is increased by reducing a quantity of antenna elements used for sending signals, to reduce interference between signals sent by different antenna elements, and improve communication performance.

It should be noted that, when a value corresponding to the measurement result of the first signal is positively correlated with performance indicated by the measurement result of the first signal, a larger value corresponding to the measurement result of the first signal indicates better performance indicated by the measurement result of the first signal; otherwise, a smaller value corresponding to the measurement result of the first signal indicates poorer performance indicated by the measurement result of the first signal. Correspondingly, that the measurement result of the first signal is better than the first threshold may be that the value corresponding to the measurement result of the first signal is greater than the first threshold. In addition, when a value corresponding to the measurement result of the first signal is negatively correlated with performance indicated by the measurement result of the first signal, a larger value corresponding to the measurement result of the first signal indicates poorer performance indicated by the measurement result of the first signal; otherwise, a smaller value corresponding to the measurement result of the first signal indicates better performance indicated by the measurement result of the first signal. Correspondingly, that the measurement result of the first signal is better than the first threshold may be that the value corresponding to the measurement result of the first signal is less than the first threshold.

Optionally, because one or more of the N antenna elements correspond to one virtual antenna port (or referred to as an antenna port, a port, a virtual antenna, or the like), in a process in which the network device sends the second signal based on the N antenna elements, after determining virtual antenna ports corresponding to the N antenna elements, the network device may process (for example, perform precoding on, perform weighting on, or the like) the second signal based on the virtual antenna ports corresponding to the N antenna elements, to obtain a processing result, and sends the processing result based on the N antenna elements.

Optionally, the second signal may include a downlink signal, downlink data, and the like.

In a possible implementation of the first aspect, that a network device obtains a measurement result of a first signal includes: The network device sends the first signal; and the network device receives the measurement result of the first signal.

According to the foregoing technical solution, the first signal may be a downlink signal sent by the network device. After the network device sends the first signal and a terminal device receives the first signal, the terminal device measures the received first signal, to obtain the measurement result of the first signal and sends the measurement result of the first signal to the network device, so that the network device obtains the measurement result of the first signal.

In a possible implementation of the first aspect, that a network device obtains a measurement result of a first signal includes: The network device receives the first signal; and the network device determines the measurement result of the first signal based on the first signal.

According to the foregoing technical solution, the first signal may be an uplink signal received by the network device. After receiving the first signal from the terminal device, the network device measures the received first signal, to obtain the measurement result of the first signal, so that the network device obtains the measurement result of the first signal.

According to the first aspect, the M antenna elements are respectively located in P columns, the N antenna elements are respectively located in Q columns of the P columns, P and Q are positive integers, P is less than or equal to M, and Q is less than or equal to N; and at least two adjacent columns of the Q columns are not adjacent in the P columns.

According to the foregoing technical solution, at least M antenna elements of the network device are respectively located in the P columns, the N antenna elements used for sending the second signal are respectively located in the Q columns of the P columns, and at least two adjacent columns of the Q columns are not adjacent in the P columns. In other words, a spacing between at least one group of adjacent columns of the N antenna elements used for sending the second signal is greater than a spacing between at least one group of adjacent columns of the P columns, to ensure that a spacing between the N antenna elements used for sending the second signal is increased, to reduce interference between signals sent by different antenna elements and improve communication performance.

Optionally, in addition to the foregoing implementation in which different antenna elements may be located in different columns, different antenna elements may alternatively be located in different rows. To be specific, the M antenna elements are respectively located in P rows, the N antenna elements are respectively located in Q rows of the P rows, and at least two adjacent rows of the Q rows are not adjacent in the P rows. In addition, for implementation processes and beneficial effects of the P rows and the Q rows, refer to the implementation processes and beneficial effects of the P columns and the Q columns. Details are not described herein again.

In a possible implementation of the first aspect, the first threshold is pre-configured; or the first threshold is a measurement result of a third signal, where antenna elements corresponding to the third signal are the M antenna elements.

According to the foregoing technical solution, the first threshold may be implemented in any one of the foregoing manners, to improve flexibility of implementing the solution. When the first threshold is pre-configured, signaling overheads can be reduced. However, when the first threshold is the measurement result of the third signal corresponding to the M antenna elements, the network device may determine, based on an actual transmission status, whether to send the second signal based on some of the M antenna elements to improve effectiveness of implementing the solution.

It should be understood that, similar to an implementation process of the first signal, the third signal may be a downlink signal, or may be an uplink signal. This is not limited herein.

In a possible implementation of the first aspect, the method further includes: When the measurement result of the first signal is inferior to the first threshold, the network device sends a fourth signal based on the M antenna elements.

According to the foregoing technical solution, when the measurement result of the first signal is inferior to the first threshold, the network device may determine that performance of performing a sending process based on the N antenna elements is poor. Therefore, the network device may send the fourth signal based on the M antenna elements, to avoid performance deterioration.

Optionally, the fourth signal may include a downlink signal, downlink data, and the like.

In a possible implementation of the first aspect, when the measurement result of the first signal is equal to the first threshold, the network device sends a fourth signal based on the N antenna elements.

According to the foregoing technical solution, when the measurement result of the first signal is equal to the first threshold, the network device may send the fourth signal based on the N antenna elements, to avoid an unnecessary increase in energy consumption by reducing a quantity of antenna elements used for sending signals without changing performance.

In a possible implementation of the first aspect, that a network device obtains a measurement result of a first signal includes: When the first condition is met, the network device obtains the measurement result of the first signal, where the first condition includes at least one of the following: The network device receives first information, where the first information is greater than a preset threshold, and the first information includes at least one of reference signal received power (reference signal received power, RSRP), a received signal strength indicator (received signal strength indicator, RSSI), a rank (RANK), a modulation and coding scheme (modulation and coding scheme, MCS), and a channel quality indicator (channel quality indicator, CQI); or the network device receives second information, where the second information is less than a preset threshold, and the second information includes delay spread information.

According to the foregoing technical solution, when the first condition is met, the network device may determine that when at least one of the following cases that causes communication performance deterioration occurs: poor channel quality, a multi-stream communication scenario, a line of sight (line of sight) communication scenario, a near LOS communication scenario (that is, a near LOS communication scenario), or the like, the network device triggers obtaining of the measurement result of the first signal, to improve communication performance by reducing a quantity of antenna elements used for sending the signals. In addition, the first condition may be implemented in the foregoing plurality of manners, to improve flexibility of the solution.

In a possible implementation of the first aspect, the method further includes: The network device sends configuration information of the first signal.

According to the foregoing technical solution, the network device may further send the configuration information of the first signal, so that the terminal device receives or sends the first signal based on the configuration information of the first signal.

In a possible implementation of the first aspect, the configuration information of the first signal is pre-configured.

According to the foregoing technical solution, when the configuration information of the first signal is pre-configured, the terminal device and the network device can perform a process of receiving and sending the first signal based on the configuration information of the first signal without additional interaction, to reduce overheads.

In a possible implementation of the first aspect, the measurement result is spectral efficiency.

Optionally, the measurement result may be a rate, for example, a downlink media access control throughput (downlink media access control throughput, DL MAC THUPT), or the measurement result may be another parameter indicating that the first signal is measured. This is not limited herein.

A second aspect of this application provides a communication apparatus. The apparatus may implement the method according to any one of the first aspect or the possible implementations of the first aspect. The apparatus includes a corresponding unit or module configured to perform the method. The unit or module included in the apparatus can be implemented by software and/or hardware. For example, the apparatus may be a communication apparatus, or the apparatus may be a component (for example, a processor, a chip, a chip system, or the like) in a communication apparatus, or the apparatus may be a logical module or software that can implement all or some functions of a communication apparatus.

In a possible implementation of the second aspect, the apparatus may include a one-to-one corresponding module for performing the method/operation/step/action described in the first aspect. The module may be a hardware circuit, or may be software, or may be implemented by a hardware circuit in combination with software.

In a possible implementation of the second aspect, the apparatus includes a processing unit and a transceiver unit, where the processing unit is configured to obtain a measurement result of a first signal, where antenna elements corresponding to the first signal are N of M antenna elements, and N is less than M; and when the measurement result of the first signal is better than a first threshold, the transceiver unit is configured to send a second signal based on the N antenna elements.

For descriptions of the measurement result of the first information, the M antenna elements, the N antenna elements, the first threshold, and the like, refer to the first aspect. Details are not described herein again.

In a possible implementation of the second aspect, when the measurement result of the first signal is inferior to a first threshold, the transceiver unit is further configured to send a fourth signal based on the M antenna elements.

In a possible implementation of the second aspect, when a first condition is met, the processing unit obtains the measurement result of the first signal. For descriptions of the first condition, refer to the first aspect. Details are not described herein again.

In a possible implementation of the second aspect, the transceiver unit is further configured to send configuration information of the first signal.

In a possible implementation of the second aspect, the measurement result is spectral efficiency.

In the second aspect of the present disclosure, modules included in the communication apparatus may be further configured to perform steps performed in the possible implementations of the first aspect, and achieve corresponding technical effects. For details, refer to the first aspect. Details are not described herein again.

A third aspect of the present disclosure provides a communication apparatus, including at least one processor, where the at least one processor is coupled to a memory, and the processor is configured to perform the method according to any one of the first aspect or the possible implementations of the first aspect. For example, the memory is configured to store a program or instructions, and the at least one processor is configured to execute the program or the instructions, so that the apparatus is enabled to implement the method according to any one of the first aspect or the possible implementations of the first aspect.

A fourth aspect of the present disclosure provides a communication apparatus, including at least one logic circuit and an input/output interface, where the logic circuit is configured to perform the method according to any one of the first aspect or the possible implementations of the first aspect.

A fifth aspect of the present disclosure provides a computer-readable storage medium storing one or more computer-executable instructions. When the one or more computer-executable instructions are executed by a processor, the processor performs the method according to any one of the first aspect or the possible implementations of the first aspect.

A sixth aspect of the present disclosure provides a computer program product (or referred to as a computer program). When the computer program product is executed by a processor, the processor performs the method according to any one of the first aspect or the possible implementations of the first aspect.

A seventh aspect of the present disclosure provides a chip system. The chip system includes at least one processor, configured to support a communication apparatus in implementing functions in any one of the first aspect or the possible implementations of the first aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

An eighth aspect of the present disclosure provides a communication system. The communication system includes the communication apparatus according to the second aspect, and/or the communication system includes the communication apparatus according to the third aspect, and/or the communication system includes the communication apparatus according to the fourth aspect.

For technical effects brought by any one of the designs of the second aspect to the eighth aspect, refer to technical effects brought by the first aspect and different designs of the first aspect. Details are not described herein again.

### BRIEF DESCRIPTION OF DRAWINGS

FIG. 1 and FIG. 2 are diagrams of a communication scenario according to the present disclosure;
FIG. 3 to FIG. 5 are diagrams of a communication method according to the present disclosure; and
FIG. 6 to FIG. 8 are diagrams of a communication apparatus according to the present

### DESCRIPTION OF EMBODIMENTS

The following describes technical solutions of the present disclosure with reference to accompanying drawings in the present disclosure.

Some terms in the present disclosure are first described, to facilitate a better understanding of a person skilled in the art.
(1) Terminal device: The terminal device may be a wireless terminal device that can be scheduled by a network device and receive indication information of the network device. The wireless terminal device may be a device that provides a user with voice and/or data connectivity, a hand-held device with a wireless connection function, or another processing device connected to a wireless modem.

The terminal device may communicate with one or more core networks or the internet by using a radio access network (radio access network, RAN). The terminal device may be a mobile terminal device, for example, a mobile phone (or referred to as a "cellular" phone, or a mobile phone (mobile phone)), a computer, or a data card. For example, the terminal device may be a portable, pocket-sized, hand-held, computer built-in, or in-vehicle mobile apparatus that exchanges voice and/or data with the radio access network. Alternatively, the terminal may be, for example, a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer with a wireless transceiver function. The wireless terminal device may alternatively be referred to as a system, a subscriber unit (subscriber unit), a subscriber station (subscriber station), a mobile station (mobile station, MS), a remote station (remote station), an access point (access point, AP), a remote terminal (remote terminal) device, an access terminal (access terminal) device, a user terminal (user terminal) device, a user agent (user agent), a subscriber station (subscriber station, SS), customer premises equipment (customer premises equipment, CPE), a terminal (terminal), user equipment (user equipment, UE), a mobile terminal (mobile terminal, MT), or the like. Alternatively, the terminal device may be a wearable device or a terminal device in a next-generation communication system, for example, a terminal device in a sixth generation (6th Generation, 6G) communication system, a terminal device in a future evolved public land mobile network (public land mobile network, PLMN), or the like.

(2) Network device: The network device may be a device in a wireless network. For example, the network device is a radio access network (radio access network, RAN) node (or device) that connects a terminal device to a wireless network, and may alternatively be referred to as a base station. Some examples of the RAN device are: a next-generation NodeB (next-generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

In some implementations, the network device may further include a satellite, an airplane, an uncrewed aerial vehicle, or the like.

In addition, in another possible case, the network device may be another apparatus that provides a wireless communication function for a terminal device. A specific technology and a specific device form used for the network device are not limited in the present disclosure. For ease of descriptions, the present disclosure is not limited thereto.

Optionally, the network device may further include a core network device. The core network device includes, for example, an access and mobility management function (access and mobility management function, AMF), a user plane function (user plane function, UPF), a session management function (session management function, SMF), and the like.

In the present disclosure, an apparatus configured to implement a function of the network device may be a network device, or may be an apparatus that can support the network device in implementing the function, for example, a processor, a chip, a chip system, or the like. The apparatus may be installed in the network device or used in a matching manner with the network device. In the technical solutions provided in the present disclosure, an example in which an apparatus configured to implement a function of the network device is a network device is used to describe the technical solutions provided in the present disclosure.

In the present disclosure, an apparatus configured to implement a function of the terminal device may be a terminal device, or may be an apparatus that can support the terminal device in implementing the function, for example, a processor, a chip, a chip system, or the like. The apparatus may be installed in the terminal device or used in a matching manner with the terminal device. In the technical solutions provided in the present disclosure, an example in which an apparatus configured to implement a function of the terminal device is a terminal device is used to describe the technical solutions provided in the present disclosure.

(3) Configuration and pre-configuration: In this application, both the configuration and the pre-configuration are used. The configuration means that a network device sends configuration information of some parameters or values of the parameters to a terminal device by using a message or signaling. The terminal device may determine, based on the values or the information, a communication parameter or a transmission resource. The pre-configuration may be that a network device negotiates parameter information or a parameter value with a terminal device in advance by using signaling or a message, or may be that parameter information or a parameter value is specified in a standard protocol and used by a network device and/or a terminal device, or may be that parameter information or a parameter value is pre-stored in a network device or a terminal device. This is not limited in the present disclosure.

Further, the value and the parameter may be changed or updated.

(4) The terms "system" and "network" in the present disclosure may be used interchangeably. "At least one" means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. At least one of the following items (pieces) or a similar expression thereof indicates any combination of these items, including any combination of a single item (piece) or a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long-term evolution (long-term evolution, LTE) system, a new radio (new radio, NR) system, or an NR vehicle-to-everything (NR vehicle-to-everything, NR V2X) system; or may be applied to a system in hybrid networking of a plurality of access technologies (for example, LTE and 5G); or a device-to-device (device-to-device, D2D) communication system, a machine-to-machine (machine-to-machine, M2M) communication system, the internet of things (Internet of Things, IoT), or an uncrewed aerial vehicle communication system; or a communication system that supports a plurality of wireless technologies, for example, an LTE technology and an NR technology; or a non-terrestrial communication system, for example, a satellite communication system, a high altitude platform station, or the like. In addition, optionally, this application may alternatively be applied to a narrowband-internet of things (narrowband-internet of things, NB-IoT) system, an enhanced data rate for global system for mobile communications (global system for mobile communications, GSM) evolution system (enhanced data rate for GSM evolution, EDGE), a wideband code division multiple access (wideband code division multiple access, WCDMA) system, a code division multiple access 2000 (code division multiple access, CDMA 2000) system, a time division-synchronous code division multiple access (time division-synchronization code division multiple access, TD-SCDMA) system, a system to which a future-oriented communication technology is applied, or another communication system.

For example, the communication system includes a network device and a terminal device. The network device is used as a configuration information sending entity, and the terminal device is used as a configuration information receiving entity. Specifically, an entity in the communication system sends configuration information to another entity, and sends data to the another entity, or receives data sent by the another entity. The another entity receives the configuration information, and sends data to the configuration information sending entity based on the configuration information, or receives data sent by the configuration information sending entity. This application may be applied to a terminal device in a connected state or an active (active) state, or may be applied to a terminal device in an inactive (inactive) state or an idle (idle) state.

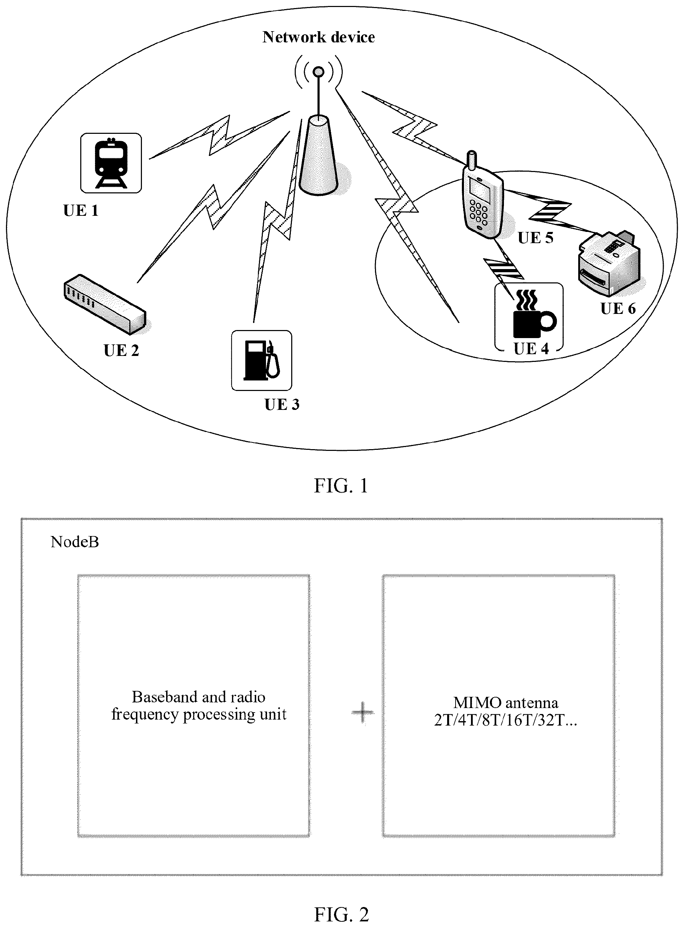

FIG. 1 is a diagram of an application scenario according to an embodiment of this application.

As shown in FIG. 1, a configuration information sending entity may be a network device, and a configuration information receiving entity may be UE 1 to UE 6. In this case, the base station and the UE 1 to the UE 6 form a communication system. In the communication system, the UE 1 to the UE 6 may send uplink data to the network device, and the network device may receive the uplink data sent by the UE 1 to the UE 6. In addition, the network device may send configuration information to the UE 1 to the UE 6.

In a wireless communication system, an antenna element refers to an apparatus that is on a wireless communication device and that is configured to receive a signal and transmit a signal. In other words, the antenna element may be configured to transmit and receive an electromagnetic wave. The communication system shown in FIG. 1 is used as an example. The network device and the terminal device generally have respective antenna elements, and are configured to receive and send a signal.

With popularization of a multi-antenna technology, an aperture gain can be obtained by deploying more antenna elements in a network device. For example, the network device is a NodeB (NodeB) shown in FIG. 2. An internal structure of the network device generally includes at least a baseband and radio frequency processing unit and a multiple-input multiple-output (multiple-input multiple-output, MIMO) antenna shown in FIG. 2. The MIMO antenna may include 2T/4T/8T/16T/32T, and the like, where "T" represents an antenna element, "2T" represents that there are two antenna elements, "4T" represents that there are four antenna elements, and so on. A conventional quantity of antenna elements is 2T, but 4T or more may be set in the MIMO system. In a beam-based communication mode, by increasing a quantity of antenna elements, more independent beams can be formed, and a beam direction can be adjusted more flexibly, to greatly improve user experience and increase a cell capacity.

However, in a wireless communication device, limited by a specification and a size of an antenna, communication performance of a device with a large quantity of antenna elements is not necessarily continuously better than communication performance of a device with a small quantity of antenna elements. For example, in a near line of sight (line of sight, LOS) channel scenario, isolation between beams is poorer. Consequently, multi-stream performance in a wide beam is poor. In other words, in some channel environments (for example, a near-point transmission scenario, a near LOS scenario, or a multi-stream transmission scenario), communication performance of a device with a large quantity of antenna elements may be poorer than communication performance of a device with a small quantity of antenna elements.

It can be learned from the foregoing content that, when the quantity of antenna elements increases, a spacing between the antenna elements may be reduced, to further increase interference between signals sent by different antenna elements, and affect communication performance. Therefore, how to improve communication performance is an urgent technical problem to be resolved.

To resolve the foregoing problem, this application provides a communication method and apparatus, to optimize a spacing between used antenna elements by flexibly setting a quantity of antenna elements used for sending signals, to reduce interference between signals sent by different antenna elements, and improve communication performance. The following is further described with reference to the accompanying drawings.

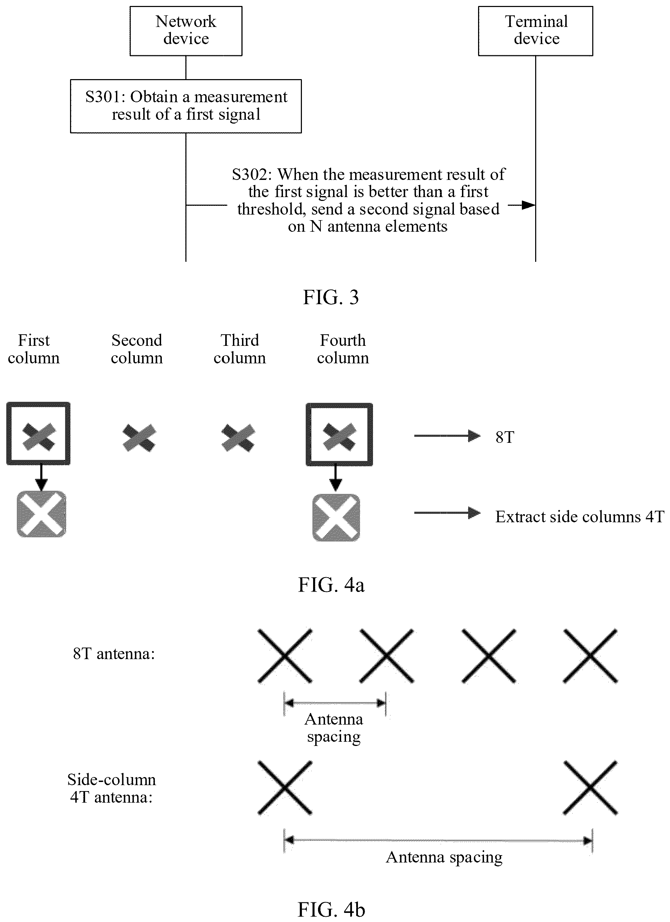

FIG. 3 is a diagram of a communication method according to this application. The method is performed by a network device, or the method is performed by some components (for example, a processor, a chip, a chip system, or the like) in a network device, or the method may be implemented by a logical module or software that can implement all or some functions of a network device. In the following descriptions, an example in which the communication method is performed by a network device is used for descriptions. The method includes the following steps.

S301: A network device obtains a measurement result of a first signal.

In the present disclosure, the network device has at least M antenna elements. The network device obtains the measurement result of the first signal in step S301, where antenna elements corresponding to the first signal are N of M antenna elements, M and N are positive integers, and N is less than M.

In a possible implementation, a process in which the network device obtains the measurement result of the first signal in step S301 includes: The network device sends the first signal; and the network device receives the measurement result of the first signal. Specifically, the first signal may be a downlink signal sent by the network device to a terminal device. After receiving the first signal, the terminal device measures the received first signal, to obtain the measurement result. The terminal device sends the measurement result of the first signal to the network device, so that the network device obtains the measurement result of the first signal. For example, a value (for example, a sequence value) of the first signal is pre-configured, and the network device sends the first signal to the terminal device by using the (original) value. The terminal device may estimate a difference between a received value and a sent value based on the original value of the first signal and a value of the received first signal, that is, may estimate a measurement result of a channel between the network device and the terminal device. In the method, that the antenna elements corresponding to the first signal are N of the M antenna elements may be understood as: The network device sends the first signal by using N of the M antenna elements.

In another possible implementation, a process in which the network device obtains the measurement result of the first signal in step S301 includes: The network device receives the first signal; and the network device determines the measurement result of the first signal based on the first signal. Specifically, the first signal may be an uplink signal sent by the terminal device to the network device. After receiving the first signal from the terminal device, the network device measures the received first signal, to obtain the measurement result of the first signal, and obtains the measurement result of the first signal. For example, a value (for example, a sequence value) of the first signal is pre-configured, and the terminal device sends the first signal to the network device by using the (original) value. The network device may estimate a difference between a received value and a sent value based on the original value of the first signal and a value of the received first signal, that is, may estimate a measurement result of a channel between the network device and the terminal device. In the method, that the antenna elements corresponding to the first signal are N of the M antenna elements may be understood as: The network device receives the first signal by using N of the M antenna elements.

In a possible implementation, the M antenna elements of the network device are respectively located in P columns, the N antenna elements corresponding to the first signal are respectively located in Q columns of the P columns, P and Q are positive integers, P is less than or equal to M, and Q is less than or equal to N; and at least two adjacent columns of the Q columns are not adjacent in the P columns. Specifically, the at least M antenna elements of the network device are respectively located in the P columns, the N antenna elements used for sending the second signal are respectively located in the Q columns of the P columns, and at least two adjacent columns of the Q columns are not adjacent in the P columns. In other words, a spacing between at least one group of adjacent columns of the N antenna elements used for sending the second signal is greater than a spacing between at least one group of adjacent columns of the P columns, to ensure that a spacing between the N antenna elements used for sending the second signal is increased, to reduce interference between signals sent by different antenna elements and improve communication performance.

Optionally, at least one of M and N is an integer multiple of 2.

Optionally, in an implementation in which the M antenna elements are respectively located in the P columns, the M antenna elements are located in the P columns in an even manner, or the M antenna elements are not located in the P columns in an even manner. This is not limited herein. In a case in which the M antenna elements are located in P columns in an even manner, a quantity of antenna elements included in each of the P columns is M/P. Similarly, in an implementation in which the N antenna elements are respectively located in the Q columns, the N antenna elements are located in the Q columns in an even manner, or the N antenna elements are not located in the Q columns in an even manner. This is not limited herein. In a case in which the N antenna elements are located in Q columns in an even manner, a quantity of antenna elements included in each of the Q columns is N/Q.

For ease of understanding, the following describes, by using several examples, an implementation process in which the M antenna elements are located in the P columns in an even manner, and an implementation of the N antenna elements.

Example 1: For example, a value of M is 8, a value of N is 4, and a value of P is 4. To be specific, eight antenna elements are located in four columns in an even manner, and each column includes two antenna elements. That is, four columns in which the eight antenna elements are located may be represented as a first column (where an index is denoted as 1), a second column (where an index is denoted as 2), a third column (where an index is denoted as 3), and a fourth column (where an index is denoted as 4). In the present disclosure, the index may be marked starting from 1, or may be marked starting from another value such as 0. This is not limited. For example, the indexes of the first column to the fourth column may alternatively be marked as 0, 1, 2, and 3 respectively.

In Example 1, a column combination other than a column combination of any two adjacent columns of the P columns is used as the Q columns in which the N antenna elements are located, where column indexes of the column combination of any two adjacent columns of the P columns include (1, 2), (2, 3), and (3, 4), and column indexes of the column combination other than the combination include (1, 3), (1, 4), and (2, 4). In other words, in Example 1, columns with indexes of (1, 3), (1, 4), or (2, 4) that are not adjacent to each other in the four columns is used as 2 columns (that is, the value of Q is 2) in which the four antenna elements are located. To implement details in the foregoing descriptions, at least two adjacent columns of the Q columns in which the N antenna elements are located are not adjacent in the P columns.

Example 2: For example, a value of M is 12, a value of N is 4, and a value of P is 6. To be specific, 12 antenna elements are located in six columns in an even manner, and each column includes two antenna elements. That is, six columns in which the 12 antenna elements are located may be represented as a first column (where an index is denoted as 1), a second column (where an index is denoted as 2), a third column (where an index is denoted as 3), a fourth column (where an index is denoted as 4), a fifth column (where an index is denoted as 5), and a sixth column (where an index is denoted as 6).

In Example 2, a column combination other than a column combination of any two adjacent columns of the P columns is used as the Q columns in which the N antenna elements are located, where column indexes of the column combination of any two adjacent columns of the P columns include (1, 2), (2, 3), (3, 4), (4, 5), and (5, 6), and column indexes of the column combination other than the combination include (1, 3), (1, 4), (1, 5), (1, 6), (2, 4), (2, 5), (2, 6), (3, 5), (3, 6), and (4, 6). In other words, in Example 1, columns with indexes of (1, 3), (1, 4), (1, 5), (1, 6), (2, 4), (2, 5), (2, 6), (3, 5), (3, 6), or (4, 6) that are not adjacent to each other in the six columns is used as 2 columns (that is, the value of Q is 2) in which the four antenna elements are located. To implement details in the foregoing descriptions, at least two adjacent columns of the Q columns in which the N antenna elements are located are not adjacent in the P columns.

For example, in Example 1, the value of M is 8 and the value of N is 4. To be specific, the network device at least includes an 8T antenna, and a 4T antenna corresponding to the first signal. As shown in FIG. 4a, an 8T antenna includes four columns of antennas (that is, the first column, the second column, the third column, and the fourth column) in the figure (that is, the value of P is 4). Each column of antennas is represented by a "cross (that is, X)" in FIG. 4a, and each column of antennas includes two antennas. Optionally, each "cross" may represent two antennas in different polarization directions at a same location. In addition, a 4T antenna (that is, the value of N is 4) is obtained by extracting side columns, and the 4T antenna is located in 2 (that is, the value of Q is 2) columns (that is, the first column and the fourth column), to ensure that at least two columns of the Q columns of antennas are not adjacent to each other. It may be understood that, in addition to the manner shown in FIG. 4a, another column may alternatively be selected for implementation. For example, when the value of Q is 2, the first column and the third column are selected as the Q columns of antennas, or the second column and the fourth column are selected as the Q columns of antennas. When the value of Q is 3, the first column, the second column, and the fourth column are selected as the Q columns of antennas, or the first column, the third column, and the fourth column are selected as the Q columns of antennas. Similarly, when M is implemented by using another value, N may alternatively be selected by referring to the implementation. Details are not described herein again.

Optionally, in addition to the foregoing implementation in which different antenna elements may be located in different columns, different antenna elements may alternatively be located in different rows. To be specific, the M antenna elements are respectively located in P rows, the N antenna elements are respectively located in Q rows of the P rows, and at least two adjacent rows of the Q rows are not adjacent in the P rows. In addition, for implementation processes and beneficial effects of the P rows and the Q rows, refer to the implementation processes and beneficial effects of the P columns and the Q columns. Details are not described herein again.

In a possible implementation, a process in which the network device obtains the measurement result of the first signal in step S401 includes: when determining that a first condition is met, the network device obtains the measurement result of the first signal in step S401, where the first condition includes at least one of the following: the network device receives first information, and the network device determines that the first information is greater than a preset threshold. For example, the first information includes but is not limited to at least one of reference signal received power (reference signal received power, RSRP), a received signal strength indicator (received signal strength indicator, RSSI), a rank (RANK), a modulation and coding scheme (modulation and coding scheme, MCS), and a channel quality indicator (channel quality indicator, CQI). Alternatively, the network device receives second information, and the network device determines that the second information is less than a preset threshold. For example, the second information includes but is not limited to delay spread information. Specifically, when the first condition is met, the network device may determine that at least one of the following cases occurs: poor channel quality, a multi-stream communication scenario, a line of sight (line of sight) communication scenario, a near LOS communication scenario (that is, a near LOS communication scenario), or the like. When the cases that may cause communication performance deterioration occur, the network device triggers obtaining of the measurement result of the first signal, to improve communication performance by reducing a quantity of antenna elements used for sending the signals. In addition, the first condition may be implemented in the foregoing plurality of manners, to improve flexibility of the solution.

In a possible implementation, the method further includes: The network device sends configuration information of the first signal. Specifically, the network device may further send the configuration information of the first signal (for example, time domain resource configuration information of the first signal, frequency domain resource configuration information of the first signal, or the like), so that the terminal device receives or sends the first signal based on the configuration information of the first signal.

Optionally, the configuration information of the first signal is pre-configured. Specifically, when the configuration information of the first signal is pre-configured, the terminal device and the network device can perform a process of receiving and sending the first signal based on the configuration information of the first signal without additional interaction, to reduce overheads.

In a possible implementation, the measurement result of the first signal is spectral efficiency. Optionally, the measurement result may be a rate, for example, a DL MAC THUPT, or the measurement result may be another parameter indicating that the first signal is measured. This is not limited herein.

S302: When the measurement result of the first signal is better than a first threshold, the network device sends a second signal based on the N antenna elements.

In the present disclosure, when the network device determines that the measurement result of the first signal obtained in step S301 is better than the first threshold, the network device sends the second signal based on the N antenna elements in step S302.

It should be noted that, when a value corresponding to the measurement result of the first signal is positively correlated with performance indicated by the measurement result of the first signal, a larger value corresponding to the measurement result of the first signal indicates better performance indicated by the measurement result of the first signal; otherwise, a smaller value corresponding to the measurement result of the first signal indicates poorer performance indicated by the measurement result of the first signal. Correspondingly, that the measurement result of the first signal is better than the first threshold may be that the value corresponding to the measurement result of the first signal is greater than the first threshold. In addition, when a value corresponding to the measurement result of the first signal is negatively correlated with performance indicated by the measurement result of the first signal, a larger value corresponding to the measurement result of the first signal indicates poorer performance indicated by the measurement result of the first signal; otherwise, a smaller value corresponding to the measurement result of the first signal indicates better performance indicated by the measurement result of the first signal. Correspondingly, that the measurement result of the first signal is better than the first threshold may be that the value corresponding to the measurement result of the first signal is less than the first threshold.

Optionally, one or more of the N antenna elements may correspond to one virtual antenna port (or referred to as an antenna port, a port, a virtual antenna, or the like). Therefore, in a process in which the network device sends the second signal based on the N antenna elements, after determining virtual antenna ports corresponding to the N antenna elements, the network device may process (for example, perform precoding on, perform weighting on, or the like) the second signal based on the virtual antenna ports corresponding to the N antenna elements, to obtain a processing result, and sends the processing result based on the N antenna elements.

Optionally, the second signal may include a downlink signal, downlink data, and the like.

In a possible implementation, the first threshold is pre-configured; or the first threshold is a measurement result of a third signal. Antenna elements corresponding to the third signal are the M antenna elements. Specifically, the first threshold may be implemented in any one of the foregoing manners, to improve flexibility of implementing the solution. When the first threshold is pre-configured, signaling overheads can be reduced. However, when the first threshold is the measurement result of the third signal corresponding to the M antenna elements, the network device may determine, based on an actual transmission status, whether to send the second signal based on some of the M antenna elements to improve effectiveness of implementing the solution.

It should be understood that, similar to an implementation process of the first signal, the third signal may be a downlink signal, or may be an uplink signal. Details are not described herein again. The first signal and the third signal may be signals in a same transmission direction, for example, both are uplink signals or both are downlink signals, or may be signals in different transmission directions, for example, the first signal is a downlink signal and the third signal is an uplink signal, or the first signal is an uplink signal and the third signal is a downlink signal. This is not limited herein. An implementation of the measurement result of the third signal is similar to the foregoing implementation of the measurement result of the first signal. Details are not described herein again.

In a possible implementation, the method further includes: When the measurement result of the first signal is inferior to the first threshold, the network device sends a fourth signal based on the M antenna elements. Specifically, when the measurement result of the first signal is inferior to the first threshold, the network device may determine that performance of performing a sending process based on the N antenna elements is poor. Therefore, the network device may send the fourth signal based on the M antenna elements, to avoid performance deterioration.

Optionally, the fourth signal may include a downlink signal, downlink data, and the like.

For example, an example in which a value of M is 8 and a value of N is 4 is still used herein. To be specific, the network device at least includes an 8T antenna, and a 4T antenna corresponding to the first signal. As shown in FIG. 4b, compared with transmission of the 4T antenna, there is a smaller antenna spacing in transmission of the 8T antenna. In other words, a spacing of the 4T antenna is larger, and a main lobe is narrower. Therefore, a discrete fourier transform (discrete Fourier transform, DFT) beam is wider, and performance of the transmission of the 8T antenna may be poorer than that of the transmission of the 4T antenna in some specific scenarios (for example, a near-point transmission scenario, a near LOS scenario, a multi-stream transmission scenario, or the like).

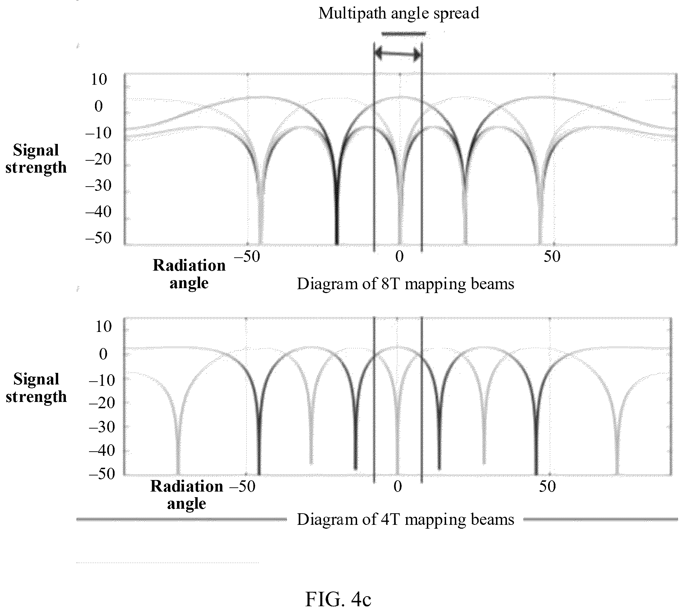

In other words, according to the foregoing example, in some specific scenarios (for example, a near LOS scenario), user multipath directions are not excessively scattered. Compared with 8T, there is a large spacing of 4T, and more orthogonal beams may be accommodated within a same angle range, so that signals of two orthogonal beams that are simultaneously received are strong, and performance of a rank (rank) 3~4 is better. As shown in FIG. 4c, different arcs in the figure represent different orthogonal beams, a horizontal coordinate represents a value of a radiation angle, and a vertical coordinate represents a value of signal strength. It can be learned that a beam of the 8T antenna is wider. With the same angle spread, the signal strength of the two orthogonal beams differs greatly. That is, the performance of the 8T antenna is poorer than that of the 4T antenna in a case when the rank is 3~4.

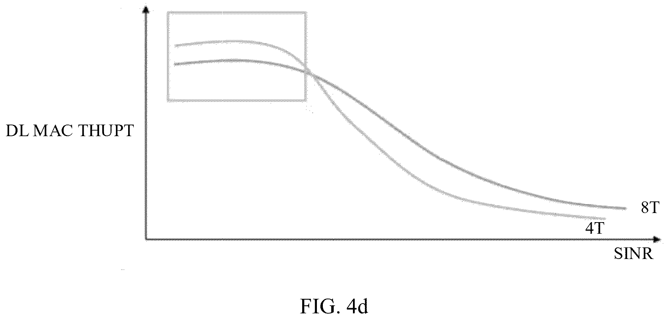

As shown in FIG. 4d, a horizontal coordinate represents a signal to interference plus noise ratio (signal to interference plus noise ratio, SINR), and a vertical coordinate represents a downlink media access control throughput (downlink MAC Throughput, DL MAC THUPT). In a case of a same DL MAC THUPT, a smaller value of the SINR indicates better performance. On the contrary, in a case of a same DL MAC THUPT, a larger value of the SINR indicates poorer performance. It can be learned from FIG. 4d that, in the foregoing special scenario, performance of the 4T antenna with a large spacing is better than performance of the 8T antenna with a small spacing. In addition to the foregoing special scenario, in a non-near-point LOS scenario, the network device still transmits a signal by using the 8T antenna. To be specific, when the measurement result of the first signal is inferior to the first threshold, the network device sends a fourth signal based on the M antenna elements.

Optionally, in a possible implementation, when the measurement result of the first signal is equal to the first threshold, the network device sends a fourth signal based on the N antenna elements. Specifically, when the measurement result of the first signal is equal to the first threshold, the network device may send the fourth signal based on the N antenna elements, to avoid an unnecessary increase in energy consumption by reducing a quantity of antenna elements used for sending signals without changing performance.

Optionally, in a possible implementation, when the measurement result of the first signal is equal to the first threshold, the network device sends a fourth signal based on the M antenna elements. Specifically, when the measurement result of the first signal is equal to the first threshold, the network device may send the fourth signal based on the M antenna elements, to simplify implementation.

According to the foregoing technical solution, the network device has at least M antenna elements. After the network device obtains the measurement result of the first signal corresponding to N of the M antenna elements in step S301, when the measurement result of the first signal is better than the first threshold, the network device sends the second signal based on the N antenna elements in step S302. In other words, when the network device determines that the measurement result of the first signal corresponding to the N antenna elements is better (that is, better than the first threshold), the network device sends the second signal based on some of the M antenna elements. Therefore, a spacing between used antenna elements is increased by reducing a quantity of antenna elements used for sending signals, to reduce interference between signals sent by different antenna elements, and improve communication performance.

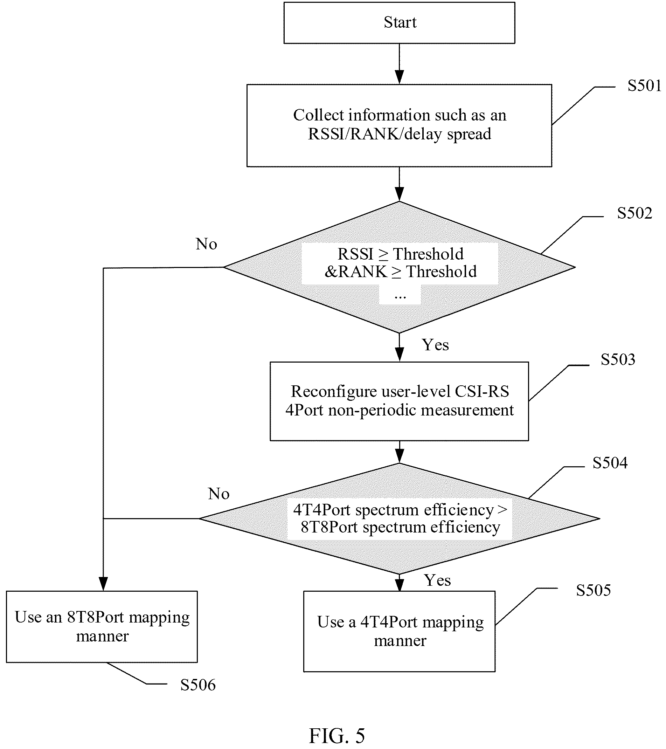

In an implementation example, the implementation process shown in FIG. 3 may alternatively be implemented in a manner shown in FIG. 5. In the instance shown in FIG. 5, an example in which a value of M is 8, a value of N is 4, a first signal is a CSI-RS, and a first threshold is a measurement result of eight antenna elements is used for descriptions.

S501: Collect a parameter (for example, information such as an RSSI/RANK/delay spread) related to a first condition.

S502: Determine whether the first condition is met, that is, determine whether the RSSI is greater than or equal to a threshold (that is, determine whether the RSSI ≥ the threshold), determine whether the RANK is greater than or equal to the threshold (that is, determine whether the RANK ≥ the threshold), or the like, and perform step S503 when determining that the first condition is met, or perform step S506 when determining that the first condition is not met.

S503: Reconfigure user-level CSI-RS 4Port (Port) non-periodic measurement (it is assumed herein that the CSI-RS 4Port corresponds to four antenna elements), where the CSI-RS 4Port is the first signal in the foregoing example.

S504: Determine whether a measurement result of four antenna elements is better than a measurement result of eight antenna elements, and if the measurement result of four antenna elements is better than the measurement result of eight antenna elements, perform step S505, or if the measurement result of four antenna elements is not better than the measurement result of eight antenna elements, perform step S506. The measurement result of the eight antenna elements is the measurement result of the third signal in the foregoing embodiment.

S505: Send a signal (that is, the second signal in the foregoing embodiment) in a mapping manner of four antenna elements (that is, 4T4Port).

S506: Send a signal (that is, the fourth signal in the foregoing embodiment) in a mapping manner of eight antenna elements (that is, 8T8Port).

It should be understood that, for an implementation process shown in FIG. 5, refer to the descriptions in the foregoing example. Details are not described herein again.

In the implementation shown in FIG. 5, all or some of the antenna elements are adaptively selected for transmission through measurement according to an actual channel condition, so that overall performance is better, a downlink user-perceived rate can be increased, and a downlink system capacity can be increased.

To implement the foregoing functions in the methods provided in the present disclosure, the network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

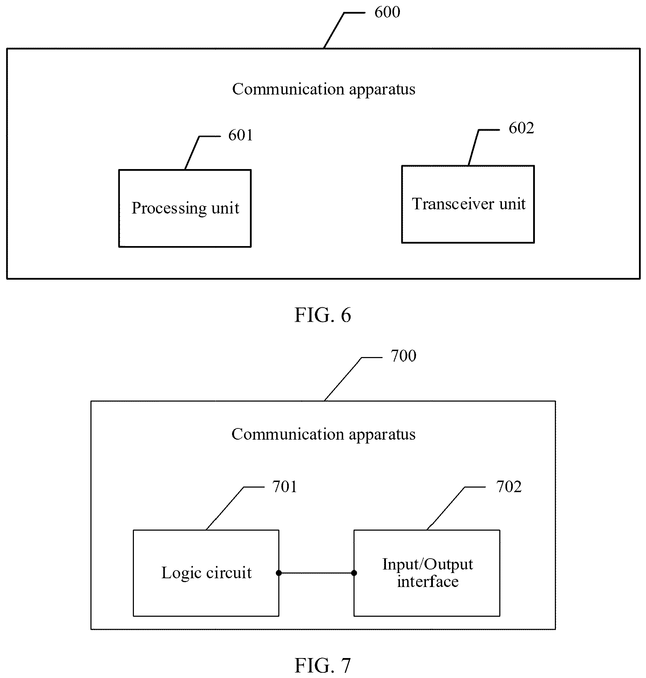

Refer to FIG. 6. An embodiment of this application provides a communication apparatus 600. The communication apparatus 600 can implement functions of the network device in the foregoing method embodiment, and therefore can also implement beneficial effects of the foregoing method embodiment. In the present disclosure, the communication apparatus 600 may be a network device, or may be a software module, an integrated circuit, an element, for example, a chip, or the like in a network device. This is not limited. The following uses an example in which the communication apparatus 600 is a network device for descriptions.

In a possible implementation, the apparatus 600 includes a processing unit 601 and a transceiver unit 602. The processing unit 601 is configured to obtain a measurement result of a first signal, where antenna elements corresponding to the first signal are N of M antenna elements, and N is less than M; and when the measurement result of the first signal is better than a first threshold, the transceiver unit 602 is configured to send a second signal based on the N antenna elements.

In a possible implementation, the transceiver unit 602 is further configured to send the first signal; and the transceiver unit 602 is further configured to receive the measurement result of the first signal.

In a possible implementation, the transceiver unit 602 is further configured to receive the first signal; and the processing unit 601 is further configured to determine the measurement result of the first signal based on the first signal.

In a possible implementation, the M antenna elements are respectively located in P columns, the N antenna elements are respectively located in Q columns of the P columns, P and Q are positive integers, P is less than or equal to M, and Q is less than or equal to N; and at least two adjacent columns of the Q columns are not adjacent in the P columns.

In a possible implementation, the first threshold is pre-configured; or the first threshold is a measurement result of a third signal, where antenna elements corresponding to the third signal are the M antenna elements.

In a possible implementation, when the measurement result of the first signal is inferior to a first threshold, the transceiver unit 602 is further configured to send a fourth signal based on the M antenna elements.

In a possible implementation, when a first condition is met, the processing unit 601 obtains the measurement result of the first signal, where the first condition includes at least one of the following: the transceiver unit 602 receives first information, where the first information is greater than a preset threshold, and the first information includes at least one of reference signal received power RSRP, a received signal strength indicator RSSI, a rank RANK, a modulation and coding scheme MCS, and a channel quality indicator CQI; or the transceiver unit 602 receives second information, where the second information is less than a preset threshold, and the second information includes delay spread information.

In a possible implementation, the transceiver unit 602 is further configured to send configuration information of the first signal.

In a possible implementation, the measurement result is spectral efficiency.

It should be noted that, for content such as an information execution process of the unit of the communication apparatus 600, refer to the descriptions in the method embodiments of this application. Details are not described herein.

FIG. 7 is another diagram of a structure of a communication apparatus 700 according to this application. The communication apparatus 700 includes at least an input/output interface 702. The communication apparatus 700 may be a chip or an integrated circuit.

Optionally, the communication apparatus further includes a logic circuit 701.

The transceiver unit 602 shown in FIG. 6 may be a communication interface. The communication interface may be the input/output interface 702 in FIG. 7, and the input/output interface 702 may include an input interface and an output interface. Alternatively, the communication interface may be a transceiver circuit, and the transceiver circuit may include an input interface circuit and an output interface circuit.

Optionally, the logic circuit 701 may be configured to obtain a measurement result of a first signal, where antenna elements corresponding to the first signal are N of M antenna elements, and N is less than M; and the input/output interface 702 is configured to: when the measurement result of the first signal is better than a first threshold, send a second signal based on the N antenna elements. The logic circuit 701 and the input/output interface 702 may further perform other steps performed by the network device in any one of the foregoing examples, and achieve corresponding beneficial effects. Details are not described herein again.

In a possible implementation, the processing unit 601 shown in FIG. 6 may be the logic circuit 701 in FIG. 7.

Optionally, the logic circuit 701 may be a processing apparatus, and some or all functions of the processing apparatus may be implemented by using software. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any one of the method embodiments.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processing units (central processing units, CPUs), network processors (network processors, NPs), digital signal processing circuits (digital signal processors, DSPs), micro controller units (micro controller units, MCUs), programmable logic devices (programmable logic devices, PLDs), or other integrated chips, or any combination of the foregoing chips or processors.

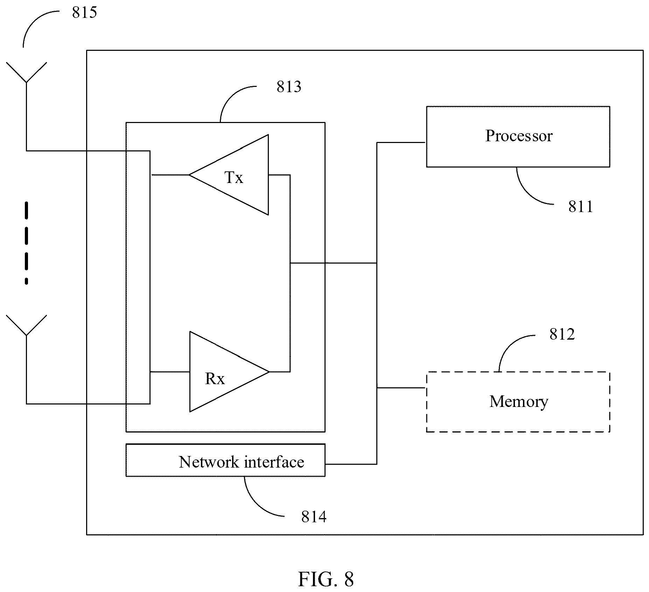

FIG. 8 is a diagram of a structure of a communication apparatus 800 in the foregoing example according to the present disclosure. The communication apparatus 800 may be specifically a communication apparatus used as the network device in the foregoing example. For example, in FIG. 8, the network device is implemented by using a network device (or a component in a network device). For a structure of the communication apparatus, refer to the structure shown in FIG. 8.

The communication apparatus 800 includes at least one processor 811 and at least one network interface 814. Further, optionally, the communication apparatus further includes at least one memory 812, at least one transceiver 813, and one or more antennas 815. The processor 811, the memory 812, and the transceiver 813 are connected to the network interface 814, for example, through a bus. In the present disclosure, the connection may include various interfaces, transmission lines, buses, or the like. This is not limited in this embodiment. The antenna 815 is connected to the transceiver 813. The network interface 814 is configured to enable the communication apparatus to communicate with another communication device through a communication link. For example, the network interface 814 may include a network interface, for example, an S1 interface, between the communication apparatus and a core network device. The network interface may include a network interface, for example, an X2 or an Xn interface, between the communication apparatus and another communication apparatus (for example, another network device or a core network device).

The processor 811 is mainly configured to process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process a communication protocol and communication data. The central processing unit is mainly configured to: control an entire terminal device, execute a software program, and process data of the software program. Functions of the baseband processor and the central processing unit may be integrated into the processor 811 in FIG. 8. A person skilled in the art may understand that the baseband processor and the central processing unit may alternatively be processors independent of each other, and are interconnected by using a technology such as a bus. A person skilled in the art may understand that the network device may include a plurality of baseband processors to adapt to different network standards, the network device may include a plurality of central processing units to enhance a processing capability of the network device, and components of the network device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of the software program, and the processor executes the software program to implement a baseband processing function.

The memory is mainly configured to store a software program and data. The memory 812 may exist independently, and is connected to the processor 811. Optionally, the memory 812 may be integrated with the processor 811, for example, integrated into a chip. The memory 812 can store program code for performing the technical solutions in embodiments of this application, and the processor 811 controls the execution. Various types of executed computer program code may also be considered as drivers of the processor 811.

FIG. 8 shows only one memory and one processor. In an actual network device, there may be a plurality of processors and a plurality of memories. The memory may alternatively be referred to as a storage medium, a storage device, or the like. The memory may be a storage element on a same chip as the processor, that is, an on-chip storage element, or an independent storage element. This is not limited in this embodiment of this application.

The transceiver 813 may be configured to support receiving or sending of a radio frequency signal between the communication apparatus and a terminal, and the transceiver 813 may be connected to the antenna 815. The transceiver 813 includes a transmitter Tx and a receiver Rx. Specifically, the one or more antennas 815 may receive a radio frequency signal. The receiver Rx of the transceiver 813 is configured to: receive the radio frequency signal from the antenna, convert the radio frequency signal into a digital baseband signal or a digital intermediate frequency signal, and provide the digital baseband signal or the digital intermediate frequency signal for the processor 811, to enable the processor 811 to perform further processing, for example, demodulation processing and decoding processing, on the digital baseband signal or the digital intermediate frequency signal. In addition, the transmitter Tx of the transceiver 813 is further configured to: receive a modulated digital baseband signal or a modulated digital intermediate frequency signal from the processor 811, convert the modulated digital baseband signal or the modulated digital intermediate frequency signal into a radio frequency signal, and transmit the radio frequency signal through the one or more antennas 815. Specifically, the receiver Rx may selectively perform one-level or multi-level frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one-level or multi-level frequency up-mixing processing and digital-to-analog conversion processing on the modulated digital baseband signal or the modulated digital medium-frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

The transceiver 813 may alternatively be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may alternatively be referred to as a receiver machine, an input port, a receiving circuit, or the like; and the sending unit may be referred to as a transmitter machine, a transmitter, a transmitter circuit, or the like.

It should be noted that, the communication apparatus 800 shown in FIG. 8 may be specifically configured to implement steps implemented by the network device in the foregoing method embodiments, and achieve technical effects corresponding to the network device. For a specific implementation of the communication apparatus 800 shown in FIG. 8, refer to the descriptions in the foregoing method embodiments. Details are not described herein again.

Division into modules in the present disclosure is an example, and is merely a logical function division. In actual implementation, another division manner may be used. In addition, functional modules in the present disclosure may be integrated into one processor, or may exist alone physically, or two or more modules may be integrated into one module. The integrated module may be implemented in a form of hardware, or may be implemented in a form of a software functional module.

All or some of the technical solutions provided in the present disclosure may be implemented by using software, hardware, firmware, or any combination thereof. When software is used to implement the present disclosure, all or some of the present disclosure may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In the present disclosure, without a logical contradiction, mutual reference can be made between examples. For example, mutual reference can be made between methods and/or terms in the method examples, mutual reference can be made between functions and/or terms in the apparatus examples, and mutual reference can be made between functions and/or terms in the apparatus examples and the method examples.

It is clear that a person skilled in the art can make various modifications and variations to this application without departing from the scope of this application. This application is intended to cover these modifications and variations of this application provided that they fall within the scope of protection defined by the following claims.

## Claims

1. A communication method, comprising:
obtaining (S301) a measurement result of a first signal, wherein antenna elements corresponding to the first signal are N of M antenna elements, M and N are positive integers, and N is less than M; and
when the measurement result of the first signal is better than a first threshold, sending (S302) a second signal based on the N antenna elements,
**characterized in that**
the M antenna elements are respectively located in P columns, the N antenna elements are respectively located in Q columns of the P columns, P and Q are positive integers, P is less than or equal to M, and Q is less than or equal to N; wherein a spacing between at least one group of adjacent columns of the N antenna elements is greater than a spacing between at least one group of adjacent columns of the P columns.

2. The method according to claim 1, wherein the obtaining (S301) a measurement result of a first signal comprises:
sending the first signal; and
receiving the measurement result of the first signal.

3. The method according to claim 1, wherein the obtaining (S301) a measurement result of a first signal comprises:
receiving the first signal; and
determining the measurement result of the first signal based on the first signal.

4. The method according to any one of claims 1 to 3, wherein
the first threshold is pre-configured; or
the first threshold is a measurement result of a third signal, wherein antenna elements corresponding to the third signal are the M antenna elements.

5. The method according to any one of claims 1 to 4, wherein the method further comprises:
when the measurement result of the first signal is inferior to the first threshold, sending a fourth signal based on the M antenna elements.

6. The method according to any one of claims 1 to 5, wherein the obtaining (S301) a measurement result of a first signal comprises:
when a first condition is met, obtaining the measurement result of the first signal, wherein the first condition comprises at least one of the following:
receiving first information, wherein the first information is greater than a preset threshold, and the first information comprises at least one of reference signal received power, a received signal strength indicator, a rank, a modulation and coding scheme, and a channel quality indicator; or
receiving second information, wherein the second information is less than a preset threshold, and the second information comprises delay spread information.

7. The method according to any one of claims 1 to 6, wherein the method further comprises: sending configuration information of the first signal.

8. The method according to any one of claims 1 to 7, wherein
the measurement result is spectral efficiency.

9. A communication apparatus, comprising a unit configured to perform the method according to any one of claims 1 to 8.

10. A computer-readable storage medium, wherein the medium stores instructions, and when the instructions are executed by a computer, the method according to any one of claims 1 to 8 is implemented.

11. A computer program product, comprising instructions, wherein when the instructions are run on a computer, the computer is enabled to perform the method according to any one of claims 1 to 8.

## Patentansprüche

1. Kommunikationsverfahren, umfassend:
Erlangen (S301) eines Messergebnisses eines ersten Signals, wobei die Antennenelemente entsprechend dem ersten Signal N von M Antennenelementen sind, M und N positive ganze Zahlen sind und N kleiner als M ist; und
wenn das Messergebnis des ersten Signals besser als ein erster Schwellenwert ist, Senden (S302) eines zweiten Signals basierend auf den N Antennenelementen,
**dadurch gekennzeichnet, dass**
sich die M Antennenelemente jeweils in P Spalten befinden, sich die N Antennenelemente jeweils in Q Spalten der P Spalten befinden, P und Q positive ganze Zahlen sind, P kleiner oder gleich M ist und Q kleiner oder gleich N ist; wobei ein Abstand zwischen mindestens einer Gruppe von benachbarten Spalten der N Antennenelemente größer als ein Abstand zwischen mindestens einer Gruppe von benachbarten Spalten der P Spalten ist.

2. Verfahren nach Anspruch 1, wobei das Erlangen (S301) eines Messergebnisses eines ersten Signals Folgendes umfasst:
Senden des ersten Signals; und
Empfangen des Messergebnisses des ersten Signals.

3. Verfahren nach Anspruch 1, wobei das Erlangen (S301) eines Messergebnisses eines ersten Signals Folgendes umfasst:
Empfangen des ersten Signals; und
Bestimmen des Messergebnisses des ersten Signals basierend auf dem ersten Signal.

4. Verfahren nach einem der Ansprüche 1 bis 3, wobei der erste Schwellenwert vorkonfiguriert ist; oder
der erste Schwellenwert ein Messergebnis eines dritten Signals ist, wobei die Antennenelemente entsprechend dem dritten Signal die M Antennenelemente sind.

5. Verfahren nach einem der Ansprüche 1 bis 4, wobei das Verfahren ferner Folgendes umfasst:
wenn das Messergebnis des ersten Signals dem ersten Schwellenwert unterliegt, Senden eines vierten Signals basierend auf den M Antennenelementen.

6. Verfahren nach einem der Ansprüche 1 bis 5, wobei das Erlangen (S301) eines Messergebnisses eines ersten Signals Folgendes umfasst:
wenn eine erste Bedingung erfüllt ist, Erlangen des Messergebnisses des ersten Signals, wobei die erste Bedingung mindestens eines der Folgenden umfasst:
Empfangen erster Informationen, wobei die ersten Informationen größer als ein voreingestellter Schwellenwert sind und die ersten Informationen mindestens eine von einer Empfangsleistung des Referenzsignals, einer Anzeige der Empfangssignalstärke, eines Rangs, eines Modulations- und Codierungsschemas und einer Kanalqualitätsanzeige umfassen; oder
Empfangen zweiter Informationen, wobei die zweiten Informationen kleiner als ein voreingestellter Schwellenwert sind und die zweiten Informationen Informationen zur Verzögerungsausbreitung umfassen.

7. Verfahren nach einem der Ansprüche 1 bis 6, wobei das Verfahren ferner Folgendes umfasst:
Senden von Konfigurationsinformationen des ersten Signals.

8. Verfahren nach einem der Ansprüche 1 bis 7, wobei das Messergebnis eine spektrale Effizienz ist.

9. Kommunikationsvorrichtung, umfassend eine Einheit, die dazu konfiguriert ist, das Verfahren nach einem der Ansprüche 1 bis 8 durchzuführen.

10. Computerlesbares Speichermedium, wobei das Medium Anweisungen speichert; und, wenn die Anweisungen durch einen Computer ausgeführt werden, das Verfahren nach einem der Ansprüche 1 bis 8 implementiert wird.

11. Computerprogrammprodukt, umfassend Anweisungen, wobei, wenn die Anweisungen auf einem Computer ausgeführt werden, der Computer in die Lage versetzt wird, das Verfahren nach einem der Ansprüche 1 bis 8 durchzuführen.

## Revendications

1. Procédé de communication, comprenant :
l'obtention (S301) d'un résultat de mesure d'un premier signal, dans lequel les éléments d'antenne correspondant au premier signal sont N parmi M éléments d'antenne, M et N sont des entiers positifs, et N est inférieur à M ; et
lorsque le résultat de mesure du premier signal est meilleur qu'un premier seuil, l'envoi (S302) d'un deuxième signal sur la base des N éléments d'antenne,
**caractérisé en ce que**
les M éléments d'antenne sont respectivement situés dans P colonnes, les N éléments d'antenne sont respectivement situés dans Q colonnes des P colonnes, P et Q sont des entiers positifs, P est inférieur ou égal à M et Q est inférieur ou égal à N ; dans lequel un espacement entre au moins un groupe de colonnes adjacentes des N éléments d'antenne est supérieur à un espacement entre au moins un groupe de colonnes adjacentes des P colonnes.

2. Procédé selon la revendication 1, dans lequel l'obtention (S301) d'un résultat de mesure d'un premier signal comprend :
l'envoi du premier signal ; et
la réception du résultat de mesure du premier signal.

3. Procédé selon la revendication 1, dans lequel l'obtention (S301) d'un résultat de mesure d'un premier signal comprend :
la réception du premier signal ; et
la détermination du résultat de mesure du premier signal sur la base du premier signal.

4. Procédé selon l'une quelconque des revendications 1 à 3, dans lequel
le premier seuil est préconfiguré ; ou
le premier seuil est un résultat de mesure d'un troisième signal, dans lequel les éléments d'antenne correspondant au troisième signal sont les M éléments d'antenne.

5. Procédé selon l'une quelconque des revendications 1 à 4, dans lequel le procédé comprend en outre :
lorsque le résultat de mesure du premier signal est inférieur au premier seuil, l'envoi d'un quatrième signal sur la base des M éléments d'antenne.

6. Procédé selon l'une quelconque des revendications 1 à 5, dans lequel l'obtention (S301) d'un résultat de mesure d'un premier signal comprend :
lorsqu'une première condition est satisfaite, l'obtention du résultat de mesure du premier signal, dans lequel la première condition comprend au moins l'un des éléments suivants :
la réception de premières informations, dans lequel les premières informations sont supérieures à un seuil prédéfini, et les premières informations comprennent au moins l'une d'une puissance du signal de référence reçu, un indicateur de force de signal reçu, un rang, un schéma de modulation et de codage, et un indicateur de qualité de canal ; ou
la réception de secondes informations, dans lequel les secondes informations sont inférieures à un seuil prédéfini, et les secondes informations comprennent des informations d'étalement des retards.

7. Procédé selon l'une quelconque des revendications 1 à 6, dans lequel le procédé comprend en outre :
l'envoi d'informations de configuration du premier signal.

8. Procédé selon l'une quelconque des revendications 1 à 7, dans lequel
le résultat de mesure est l'efficacité spectrale.

9. Appareil de communication, comprenant une unité configurée pour réaliser le procédé selon l'une quelconque des revendications 1 à 8.

10. Support de stockage lisible par ordinateur, dans lequel le support de stockage stocke des instructions, et lorsque les instructions sont exécutées par un ordinateur, le procédé selon l'une quelconque des revendications 1 à 8 est mis en œuvre.

11. Produit de programme informatique, comprenant des instructions, dans lequel lorsque les instructions sont exécutées sur un ordinateur, l'ordinateur est activé pour réaliser le procédé selon l'une quelconque des revendications 1 à 8.
